# EUROPÄISCHE PATENTSCHRIFT

(11) **EP 2 081 268 B1**
(45) Veröffentlichungstag und Bekanntmachung des Hinweises auf die Patenterteilung: **16.11.2011**
(21) Anmeldenummer: 09150887.9
(22) Anmeldetag: 19.01.2009
(51) Int. Cl.: H02G 3/30, H02G 3/04

(54) **Vorrichtung mit einem Kabelkanal**
Device with a cable channel
Dispositif doté d'un canal pour câble

(30) Priorität: 21.01.2008 CH 912008
(43) Veröffentlichungstag der Anmeldung: 22.07.2009
(73) Patentinhaber: Zurecon AG, 8003 Zürich (CH)
(72) Erfinder: Pfluger, Gerd, CH-4625, Oberbuchsiten (CH)
(74) Vertreter: Rutz & Partner

(56) Entgegenhaltungen:
- EP-A- 1 187 280
- EP-A- 1 187 281
- EP-A- 1 833 133
- DE-A1- 3 936 003

## Beschreibung

Die Erfindung betrifft eine Vorrichtung mit einem Kabelkanal nach dem Oberbegriff des Patentanspruchs 1.

In Gewerbe- Industrie- und Verwaltungsgebäuden werden Kabel, insbesondere Kabel für Stark- und Schwachstromnetze, infolge fehlender Eigenstabilität in Kabelkanälen geführt, beispielsweise von einem Schaltfeld einer Zentrale zu den Verbrauchern. Kabelkanäle dieser Art sind beispielsweise aus dem Produktkatalog der LANZ OENSINGEN AG, Januar 2006, bekannt.

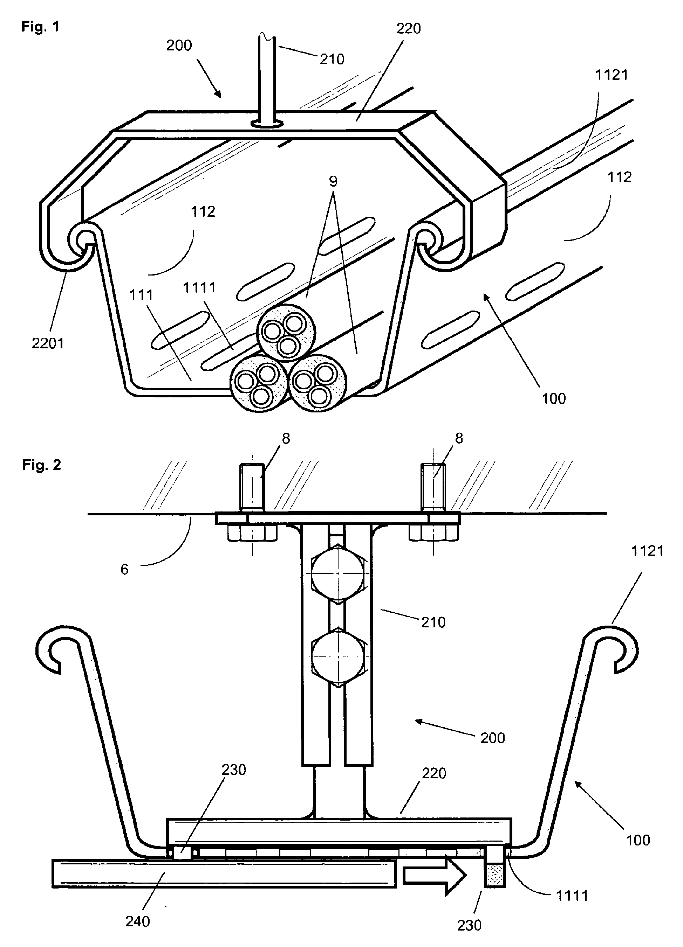

Figur 1 zeigt einen bekannten mit schlitzartigen Öffnungen 1111 versehenen Kabelkanal 100, welcher zwei durch ein Bodenteil 111 miteinander verbundene Seitenwände 112 mit nach aussen gedrehten Endstücken 1121 aufweist. Der Kabelkanal 100 ist von einer Montagevorrichtung 200 gehalten, die einen mittels eines Halteteils 210 mit der Decke verbundenen Bügel 220 aufweist, der beidseitig mit Haken 2201 versehen ist, die in die Endstücke 1121 des Kabelkanals 100 eingreifen.

Die in Figur 1 gezeigte Lösung weist verschiedene Nachteile auf. Einerseits resultiert eine relativ aufwendige Montage der Montagevorrichtung 200, des Kabelkanals 100 und der zu installierenden Kabel 9. Das Verbinden des Bügels 220 mit dem Kabelkanal 100 erfordert eine Krafteinwirkung, durch die die Seitenwände 112 soweit gegeneinander gepresst werden, bis die Haken 2201 in die Endstücke 1121 einführbar sind. Angesichts dessen, dass der Kabelkanal 100 an der Decke zu montieren ist und der Handwerker normalerweise sich auf einer Leiter befindet, ist diese Montageart umständlich. Deutlich erschwert wird die Montage, wenn in den Kabelkanal 100 bereits Kabel 9 eingelegt sind, die oft ein erhebliches Gewicht aufweisen. Sofern die Kabel 9 erst nach der Montage des Kabelkanals 100 installiert werden, muss es hingegen umständlich eingeschlauft werden. Insbesondere benötigt die Vorrichtung von Figur 1 auch viel Platz und reicht mit einem deutlichen Abstand zur Decke weit in den Raum hinein. Nicht zuletzt deshalb, insbesondere jedoch wegen der technisch bedingten Form genügt diese Vorrichtung in vielen Fällen auch den Anforderungen der Anwender an die Ästhetik nicht.

Die aus der EP 1 505 705 A1 bekannte Montagevorrichtung 200 von Figur 2 weist ein an einer Decke montierbares ein- oder mehrteiliges Halteteil 210 auf, welches dem Halten eines Kabelkanals 100 dient, wie er beispielsweise in Figur 1 gezeigt ist. Das Halteteil 210 ist an dem dem Kabelkanal 100 zugewandten Ende mit einem Ausleger 220 fest verbunden, der wenigstens zwei Fangelemente 230 aufweist, die je durch eine der im Kabelkanal 100 vorgesehenen Öffnungen 1111 hindurch führbar und auf der anderen Seite schraubenlos mit einer Fangvorrichtung 24 verbindbar sind, so dass der Kabelkanal 100 zwischen Ausleger 220 und Fangvorrichtung 240 fest gehalten ist.

Mittels der Vorrichtung von Fig. 2 werden verschiedene Nachteile der Vorrichtung von Figur 1 vermieden. Nachdem das Halteteil 210 an der Decke verschraubt wurde, kann der Kabelkanal 100 gegen das Halteteil 210 angehoben werden, bis er, nach dem Durchtreten der Fangelemente 230 durch die Öffnungen 1111 im Kabelkanal 100, an den Ausleger 220 anstösst, und die Fangvorrichtung 240 mit den Fangelementen 230 verbunden werden kann. Das Verbinden der Fangvorrichtung 240 mit den Fangelementen 230 erfolgt in einfacher Weise rasch durch seitliches Einführen und ohne die Verwendung von Schrauben und weiteren Verbindungsmitteln. Kabel 9 können nach der Montage der Vorrichtung in einfacher Weise in den Kabelkanal 100 eingelegt und wieder entnommen werden.

Auch bei der Vorrichtung von Fig. 2 resultiert jedoch ein relativ grosser Abstand zwischen der Decke 6 und den oberen Enden 1121 des Kabelkanals 100. Während das Erscheinungsbild dieses Kabelkanals 100 in Fabriken und Tunnels kaum zu beanstanden ist, genügt dieses bei gehobenen Ansprüchen, in Wohnhäusern, Labors, Fertigungsstätten und öffentlichen Gebäuden normalerweise nicht.

Bei den Vorrichtungen von Figur 1 und Figur 2 ist ferner zu beachten, dass die in die Kabelkanäle 100 eingelegten Kabel 9 nur mangelhaft geschützt sind. Aufgrund des grossen Abstands zwischen den Kabelkanälen 100 und der Decke 6 können Unbefugte leicht auf die eingelegten Kabel 9 zugreifen.

Die von den Vorrichtungen von Figur 1 und Figur 2 gehaltenen Kabel sind auch gegen weitere möglicherweise auftretende Einwirkungen kaum geschützt. Insbesondere sind die Kabel 9 gegen Feuer und Wasser nicht geschützt.

Aus der EP 1 187 281 A2 ist ein brandgeschützter Kabelkanal bekannt, der aus einem mit einer Metalleinlage verstärkten Verbundwerkstoff gebildet ist.

Aus der EP 1 187 280 A2 ist ein brandgeschützter Kabelkanal bekannt, der in eine Brandschutzverkleidung eingeschlossen ist.

Aus der DE 3936003 A1 ist ein brandgeschützter Kabelkanal bekannt, in den Brandschutzelemente eingelegt sind.

Aus der EP 1 833 133 A1 ist ein Kabelkanal bekannt, der von vereinzelten Halteteilen gehalten wird, die an einem Gebäudeteil montierbar sind. Die Kabel liegen auf dem Kabelkanal auf und sind gegen äussere Einflüsse kaum geschützt.

Die Verwendung eines mit einer Metalleinlage verstärkten Verbundwerkstoffs als Brandschutzmaterial oder die komplette Verkleidung eines Kabelkanals mit Brandschutzmaterial erfordert einen erheblichen Aufwand zur Herstellung dieser Vorrichtungen. Die Verwendung von Brandschutzelementen, die in einen konventionellen Kabelkanal eingelegt werden, bietet kaum den erwünschten Schutz. Sofern kein Brandschutzmaterial verwendet wird, sind die installierten Kabel hingegen nur ungenügend geschützt.

Der vorliegenden Erfindung liegt daher die Aufgabe zugrunde, eine verbesserte Vorrichtung mit einem Kabelkanal zu schaffen.

Insbesondere ist eine Vorrichtung zu schaffen, die eine einfach ausgestaltete Montagevorrichtung aufweist, mittels der der Kabelkanal mit geringem Aufwand montiert werden kann und die zu installierenden Kabel bequem eingelegt werden können. Der Kabelkanal soll dabei möglichst nahe an der Decke liegen und wenig Platz in Anspruch nehmen. Ferner sollen die Kabel optimal gegen äussere Einwirkungen geschützt sein. Weiterhin soll die erfindungsgemässe Vorrichtung optisch nicht störend in Erscheinung treten und ästhetisch vorteilhaft ausgestaltet sein.

Diese Aufgabe wird mit einer Vorrichtung gelöst, welche die in Anspruch 1 angegebenen Merkmale aufweist. Vorteilhafte Ausgestaltungen der Erfindung sind in weiteren Ansprüchen angegeben.

Erfindungsgemäss sind beidseits des Kabelkanals oder beidseits von Kabelkanalsegmenten, die beabstandet voneinander montiert den Kabelkanal bilden, Kopplungselemente vorgesehen und damit verbunden. Ferner ist eine Abdeckung vorgesehenen, die den Kabelkanal von unten und seitlich umfasst und die mit zweiten Kopplungselementen versehen ist, die mit den ersten Kopplungselementen derart verbindbar sind, dass zwischen dem Gebäudeteil und den Kopplungselementen, sofern für die Belüftung der Kabel erwünscht, maximal ein Lüftungsschlitz verbleibt.

Auf diese Weise gelingt es, die Vorrichtung mit geringer Bauhöhe zu fertigen, so dass diese eng an der Decke anliegt und nicht störend in Erscheinung tritt. Nebst den funktionalen Vorteilen der erfindungsgemässen Lösung ist daher auch das ästhetische Erscheinungsbild des erfindungsgemässen Kabelkanals besonders vorteilhaft, da sich dessen Seiten- und Unteransicht praktisch schwellenlos in die Decke einfügen. Vor dem Aufsetzen der Abdeckung können die Kabel mit einfachen Handgriffen in den einstückigen Kabelkanal oder in die entfernt voneinander montierten Segmente des Kabelkanals eingelegt werden. Sofern der Kabelkanal aus mehreren Teilen besteht, werden die Kabel im Bereich zwischen den örtlich voneinander getrennt montierten Kabelkanalsegmenten von der anschliessend aufgesetzten Abdeckung gestützt. Da die Hauptlast der Kabel jedoch von den Kabelkanalsegmenten getragen wird, ergibt sich für die Abdeckung nur eine relativ geringe Belastung.

Die Kopplungselemente können an einem separaten Halteelement, am Kabelkanal oder an den Kabelkanalsegmenten angeformt sein. Der Kabelkanal und das Halteelement, das aus einer Platte und den Kopplungselementen besteht, können auch als separate Teile vorgesehen werden, die mittels der Montageelemente montiert werden. Vorzugsweise sind der Kabelkanal und das Halteelement bzw. die Kopplungselemente jedoch einstückig miteinander verbunden und vorzugsweise aus Blech gefertigt. Dadurch kann die erfindungsgemässe Vorrichtung mit minimalem Materialaufwand gefertigt werden. Ferner ergibt sich eine vereinfachte Montage der Vorrichtung insbesondere auch in Fällen mit erschwerten Installationsbedingungen. Aufgrund des geringen Flächendrucks des Halteelementes kann der Kabelkanal nämlich auch an sogenannt "weichen" Decken montiert werden, die z.B. mit Isolationsmatten. Gipsplatten, etc. versehen sind, ohne diese "weichen" Schichten zu entfernen.

Die Fertigung und Lagerung des Kabelkanals, d.h. des Halteelements und/oder der Abdeckung, kann besonders vorteilhaft erfolgen, wenn diese Teile symmetrisch und/oder stapelbar ausgestaltet sind.

Beispielsweise kann das Halteelement ein nach unten geöffnetes U-Profil bilden, an dessen Seitenwänden die ersten, vorzugsweise hakenförmigen Kopplungselemente vorgesehen sind. Die Höhe der Seitenwände des U-Profils kann beliebig gewählt und z.B. auf die notwendige Grösse der Kopplungselemente reduziert werden. Durch diese Massnahme gelingt es, die vorzugsweise U-Profil-förmige Abdeckung derart auszugestalten, dass deren Seitenwände praktisch bis an die Decke reichen und den Kabelkanal fast vollständig abdecken und optimal schützen. Von der gesamten Vorrichtung ist daher praktisch nur die Abdeckung wahrnehmbar, die ästhetisch vorteilhaft ausgestaltet werden kann. Durch den oder die zwischen der Decke und der Abdeckung verbleibenden Belüftungsschlitz(e) wird die Belüftung der installierten Kabel trotzdem gewährleistet.

Funktional ergibt sich der grosse Vorteil, dass die von der Abdeckung umfasste Vorrichtung gegen einen Eingriff von Unbefugten weitgehend geschützt ist. Auch gegenüber weiteren Einwirkungen, wie Feuchtigkeit und Wasser, resultiert ein erhöhter Schutz. Im Brandfall bildet die feuerhemmende Abdeckung einen Schutzschild. Diese erste Brandschutzmassnahme kann durch nachstehend beschriebene weitere Massnahmen vorteilhaft ergänzt werden, so dass beispielsweise der wenigstens eine oben genannte Belüftungsschlitz im Brandfall automatisch verschlossen wird. Dieses automatische Verschliessen wird vorzugsweise durch die Expansion von Brandschutzmaterial oder durch die Verwendung von thermischreaktiven Elementen erzielt. Beispielsweise kann die Abdeckung mit Bimetall-Elementen versehen werden, welche zugeordnete Belüftungsschlitze beim Auftreten erhöhter Temperaturen automatisch verschliessen.

Hinsichtlich der Feuerproblematik ist besonders wesentlich, dass bei der erfindungsgemässen Vorrichtung ein wesentlicher Schutz vor hohen Temperaturen durch das Gebäudeteil erzielt wird, an dem die Vorrichtung nahe anliegt. Im Gegensatz zu frei im Raum geführten konventionellen Kabelkanälen, bei denen auch das Trägersystem gegen Brandeinwirkung geschützt werden muss, reduzieren sich die erforderlichen Massnahmen für den Brandschutz signifikant. Hinsichtlich der Brandschutzfunktion wird das Gebäudeteil somit funktional ein wichtiger Bestandteil der Vorrichtung.

Die ersten und zweiten Kopplungselemente sind vorzugsweise derart ausgestaltet, dass sie formschlüssig miteinander verbindbar und wieder lösbar sind. Um Manipulationen unberechtigter Dritter zu vermeiden, können die ersten und zweiten Kopplungselemente zusätzlich mit einem Sicherungselement verbunden werden.

Der Kabelkanal oder die Kabelkanalsegmente, sofern vorhanden auch das Halteelement, können daher vormontiert werden. Anschliessend werden die Kabel in den Kabelkanal oder in die Kabelkanalsegmente eingelegt. Abschliessend wird die Abdeckung aufgesetzt. Sofern zu einem späteren Zeitpunkt zusätzliche Kabel einzulegen, oder installierte Kabel zu entfernen sind, kann die Abdeckung leicht entfernt werden, indem das gegebenenfalls vorhandene Sicherungselement entfernt und die ersten und zweiten Kopplungselemente voneinander gelöst werden.

In einer vorzugsweisen Ausgestaltung weist der Kabelkanal bzw. weisen die Kabelkanalsegmente zwei dem Halten von Kabeln dienende Kanalelemente mit einander zugewandten Kanalseiten auf, die an den oberen Enden durch ein Kanalmittelteil miteinander verbunden sind. Im Kanalmittelteil ist mindestens eine Öffnung vorgesehen, die der Durchführung eines in der Decke verankerten Gewindestifts dient. Die parallel zueinander verlaufenden Kanalelemente können dazu verwendet werden, um die Kabel geordnet, beispielsweise getrennt nach Kabelfunktionen einzulegen.

Um eine möglichst vorteilhafte Gestaltung der Vorrichtung zu erzielen, weist die Abdeckung vorzugsweise einen Profilverlauf bzw. Profilquerschnitt auf, der zumindest annähernd dem Profilverlauf des Kabelkanals entspricht. Beispielsweise weist die Abdeckung zwei dem Umfassen der Kanalelemente dienende Seitenelemente auf, die durch ein Abdeckungsmittelteil miteinander verbunden sind. Unterhalb des Abdeckungsmittelteils und zwischen den Seitenelementen ist ein Raum vorhanden, der vorteilhaft für die Montage VON elektrischen Einrichtungen, insbesondere von Leuchtkörpern verwendet werden kann. Der Kabelkanal wird in diesem Fall nicht als solcher, sondern als Teil der Beleuchtungseinrichtung wahrgenommen.

Vorzugsweise sind der Kabelkanal, das Halteelement und/oder die Abdeckung mit Ventilationsöffnungen versehen, die der Belüftung der installierten Kabel dienen, beispielsweise um Wärme und Feuchtigkeit abzuführen.

Zwecks Kühlung der Kabel weist die Vorrichtung zwischen der Unterseite des Kabelkanals und der Oberseite der Abdeckung vorzugsweise einen Abstand auf, der z.B. 0,5 cm bis 2,5 cm beträgt. Dadurch wird ein Raum geschaffen, der als Isolations-oder Schutzzone verwendet werden kann. Dabei wird verhindert, dass Einwirkungen auf die Abdeckung unmittelbar auf den Kabelkanal und die Kabel übertragen werden. Ferner besteht die Möglichkeit, diesen Raum beim Auftreten eines Brandfalls mittels eines Schutzmediums, wie einer Flüssigkeit, beispielsweise Wasser, eines Gases oder eines Feststoffes zu fluten. In einer vorzugsweisen Ausgestaltung wird die erfindungsgemässe Vorrichtung mit der Sprinkleranlage des Gebäudes gekoppelt, so dass im Falle eines Brandes Wasser in den genannten Raum eingeführt wird. Nach Abschluss der Alarmsituation kann die Abdeckung entfernt, und das Wasser beseitigt werden. Nachdem die Kabel getrocknet sind, wird die Abdeckung wieder aufgesetzt.

In einer weiteren vorzugsweisen Ausgestaltung wird der Raum zwischen der Unterseite des Kabelkanals und der Oberseite der Abdeckung ganz oder teilweise mit einem Brandschutzmaterial versehen. In einer besonders vorteilhaften Ausgestaltung ist das Brandschutzmaterial ausserhalb der nahe an der Decke anliegenden Abdeckung vorgesehen, so dass diese umschlossen und die gesamte Vorrichtung gegen die Einwirkung von Hitze und Feuer geschützt wird. Es werden daher nicht nur die Kabel, sondern auch die vorzugsweise aus Blech, gegebenenfalls aus einem Kunststoff bestehenden Vorrichtungsteile geschützt.

Dadurch gelingt es, Schäden an den installierten Kabeln und der Vorrichtung zu vermeiden, wenn erhöhte Temperaturen nicht permanent auftreten. Bei einem Brand, der nach wenigen Minuten gelöscht wird, treten daher kaum Schäden an den Kabeln oder an der Vorrichtung auf. Die Brandhemmung ist jedoch auch dann von grosser Bedeutung, wenn der Brand über eine längere Dauer anhalten und die Kabel zerstören würde. In diesem Fall ist wesentlich, dass die Verkabelung über eine möglichst lange Dauer ihre Dienste erfüllt, so dass z.B. Sicherheitsanlagen, Beleuchtungen und steuerbare Anlagen der Infrastruktur in Notfällen in Betrieb bleiben.

In einer weiteren vorzugsweisen Ausgestaltung wird der Raum zwischen der Unterseite des Kabelkanals und der Oberseite der Abdeckung nur teilweise mit einem Material gefüllt, das beim Auftreten von höheren Temperaturen expandiert und den Raum zwischen der Unterseite des Kabelkanals und der Oberseite der Abdeckung erst im Brandfall vollständig ausfüllt und/oder die Ventilationsöffnungen für die Lüftung dicht abschliesst.

Sofern das Brandschutzmaterial ausserhalb der Abdeckung angeordnet ist, so wird dieses praktisch bis zur Decke hochgezogen. Unter Einwirkung höherer Temperaturen expandiert das Brandschutzmaterial in der Folge und stösst dadurch gegen die Decke an, so dass die Belüftungsschlitze verschlossen und die Vorrichtung mit den installierten Kabel zwischen dem Brandschutzmaterial und der Decke vollständig eingeschlossen wird.

Die derart ausgestaltete Vorrichtung ist daher für den Normalbetrieb und für den Notfall optimal vorbereitet. Im Normalbetrieb werden die Kabel über die Ventilationsöffnungen und den Belüftungsschlitz gekühlt. Im Notfall, beim Auftreten von hohen Temperaturen, durch die die Kabel beschädigt würden, werden diese gegen die einwirkende Brandgase durch das aufquellende Brandschutzmaterial dicht abgeschirmt.

Die erfindungsgemässe Vorrichtung erlaubt es somit, das Brandschutzmaterial besonders effizient und wirkungsvoll einzusetzen. Es wird relativ wenig Material und somit auch wenig Raum für dieses Material benötigt. Dabei wird das Brandschutzmaterial vorzugsweise vorfabriziert mit der Abdeckung verbunden. Dadurch ergibt sich eine problemlose Installation des Brandschutzmaterials, das zusammen mit der Abdeckung praktisch in einem Arbeitsgang montiert werden kann. Anstelle nur einer Art von Brandschutzmaterial können auch verschiedene Materialien kombiniert verwendet werden. Ferner sind auch Materialien verwendbar, die luftdurchlässig sind und dazu über entsprechende Poren oder Luftkanäle verfügen, die sich unter Wärmeeinwirkung verschliessen. Auch mit solchem Brandschutzmaterial ist gewährleistet, dass die Kabel während des Normalbetriebs gekühlt und erst in einem Brandfall nach aussen abgeschottet werden. Das vorfabrizierte Brandschutzmaterial kann an dessen Innenseite mit Kopplungselementen versehen sein, die mit Kopplungselementen des Kabelkanals, insbesondere der Abdeckung zusammenwirken können. Beispielsweise können in Schlitzen des Brandschutzmaterials sogenannte Kunststoff-Clips verankert sein, die mit der Abdeckung zusammenwirken. Nach dem Entfernen des Brandschutzmaterials, beispielsweise nach einem Brandfall oder für das Einlegen weiterer Kabel, wird das Brandschutzmaterial entfernt. Kunststoff-Clips, die dadurch aus der Verankerung gelöst werden, sind in diesem Fall neu einzusetzen, was mit minimalem Aufwand möglich ist.

Nachfolgend wird die Erfindung anhand von Zeichnungen näher erläutert. Dabei zeigt:
- Fig. 1: eine erste bekannte Vorrichtung mit einem Kabelkanal 100;
- Fig. 2: eine zweite bekannte Vorrichtung mit einem Kabelkanal 100;
- Fig. 3: eine erfindungsgemässe Vorrichtung mit einem Kabelkanal 1, der mittels eines Gewindestifts 21 und einer Schraubenmutter 22 an einer Decke 6 montiert und von einer Abdeckung 4 umfasst ist, die von einem an der Decke 6 anliegenden Halteelement 3 gehalten wird;
- Fig. 4: das Halteelement 3, der Kabelkanal 1 und die Abdeckung 4 in Schnittdarstellung von vorn;
- Fig. 5: das Halteelement 3, der mit Ventilationsöffnungen 122 versehene Kabelkanal 1 und die mit Ventilationsschlitzen 43 versehene Abdeckung 4 in räumlicher Darstellung;
- Fig. 6: eine erfindungsgemässe Vorrichtung mit einem zwischen dem Kabelkanal 1 und der Abdeckung 4 vorgesehenen Brandschutzmaterial 7;
- Fig. 7: eine erfindungsgemässe Vorrichtung mit einem ausserhalb der Abdeckung 4 vorgesehenen Brandschutzmaterial 7;
- Fig. 8: ein Kabelkanalsegment 1' und ein Halteelement 3, die aus einem einzigen Blechstück 31 gefertigt sind sowie eine Abdeckung 4, die mit einer Leuchteinheit 8 versehen ist; und
- Fig. 9: ein weiteres Kabelkanalsegment 1', das mit ersten Kopplungselementen 321 versehen ist;
- Fig. 10: das Brandschutzmaterial 7 der Vorrichtung von Figur 6 in einer für die Verbindung mit der Abdeckung 4 geeigneten Form; und
- Fig. 11: das Brandschutzmaterial 7 der Vorrichtung von Figur 7 in einer für die Verbindung mit der Abdeckung 4 geeigneten Form.

Figur 1 und Figur 2 zeigen die eingangs beschriebenen bekannten Vorrichtungen.

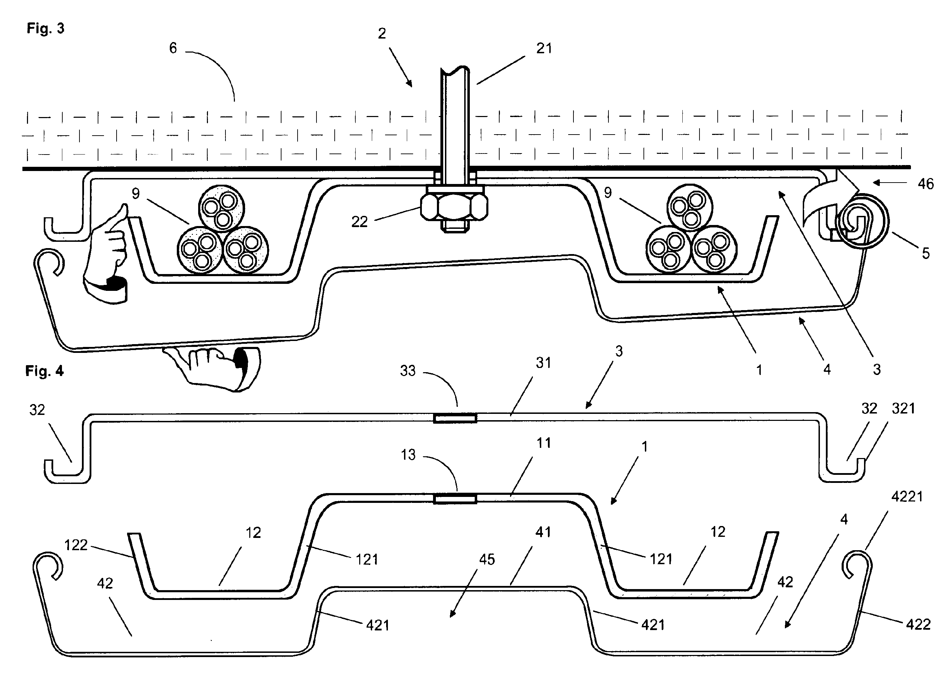

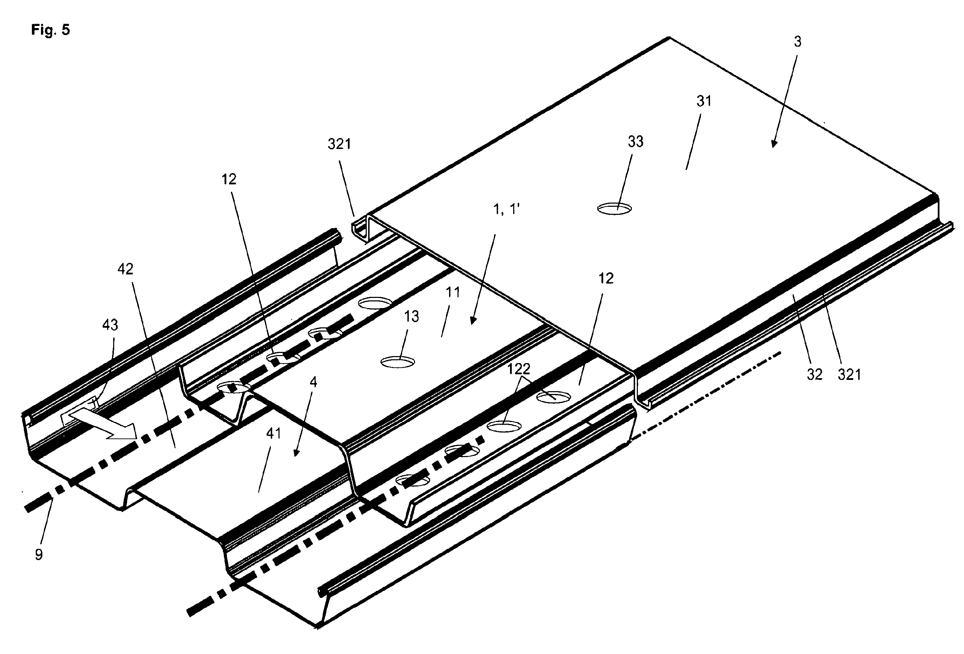

Figur 3 zeigt eine erfindungsgemässe Vorrichtung mit einem Kabelkanal 1, der mittels eines in einer Decke 6 verankerten Gewindestifts 21 und einer Schraubenmutter 22 montiert ist. Der Kabelkanal 1, der in Figur 4 und in Figur 5 in verschiedenen Ansichten gezeigt ist, umfasst zwei dem Halten von Kabeln 9 dienende Kanalelemente 12, die je zwei erste und zweite Kanalseiten 121, 122 aufweisen. Die oberen Enden der einander zugewandten ersten Kanalseiten 121 sind durch ein Kanalmittelteil 11 miteinander verbunden. Das Kanalmittelteil 11 ist mit einer Öffnung 13 versehen, durch die der Gewindestift 21 hindurch führbar ist. Das Kanalmittelteil 11 liegt nach der Montage nahe an der Decke 6 an, weshalb die beiden nach aussen gewandten zweiten Kanalseiten 122 gegenüber den ersten Kanalseiten 121 vorzugsweise verkürzt sind, so dass Kabel 9 über diese zweiten Kanalseiten 122 angehoben und in das entsprechende Kanalelement 12 eingelegt werden können.

Unmittelbar am Kabelkanal 1 anliegend ist ein Halteelement 3 vorgesehen, das ebenfalls durch die Schraubenmutter 22 und den Gewindestift 21 gehalten ist, der durch eine darin vorgesehene Öffnung 33 hindurch geführt ist. In der gezeigten Ausgestaltung besteht das Halteelement 3 im Wesentlichen aus einer Platte 31, die beidseits mit den nach unten gerichteten Kopplungselementen 321 versehen ist. Das Halteelement 3 weist somit annähernd ein nach unten geöffnetes U-Profil auf, an dessen Seitenwänden 32 die hakenförmigen Kopplungselemente 321 vorgesehen sind, die formschlüssig mit den Kopplungselementen 4221 einer Abdeckung 4 verbindbar sind. Die gezeigte formschlüssige Verbindung zwischen den Kopplungselementen 321, 4221 ist einfach realisierbar und gewährleistet, dass die Abdeckung 4 sicher gehalten wird. Alternativ ist es jedoch auch möglich, eine kraftschlüssige Verbindung zwischen dem Halteelement 3 und der Abdeckung 4 vorzusehen.

Es ist gezeigt, dass die Abdeckung 4 momentan nur an einer Seite mit den Kopplungselementen 321 des Halteelements 3 verbunden ist. In dieser Position können die Kabel 9 von beiden Seiten in die Kanalelemente 12 eingelegt werden. Wie in Figur 3 weiter gezeigt ist, wird die Abdeckung 4 nach dem Einlegen der Kabel 9 angehoben und auch auf der anderen Seite mit den Kopplungselementen 321 des Halteelements 3 verbunden. Danach sind die oberen Enden beziehungsweise die Kopplungselemente 4221 der Abdeckung 4 je nur durch einen Belüftungsschlitz 46 von der Decke 6 getrennt, weshalb der Kabelkanal 1 mit den installierten Kabeln 9 von der Decke 6 und der Abdeckung 4, vorbehaltlich der Belüftungsschlitze 46, vollständig umschlossen und optimal geschützt sind.

Damit die Verbindung zwischen den ersten Kopplungselementen 321 des Kabelkanals 1 und den zweiten Kopplungselementen 4221 der Abdeckung 4 durch unbefugte Dritte nicht gelöst werden kann, sind diese z.B. mit einem Sicherungsring 5 zusätzlich gekoppelt.

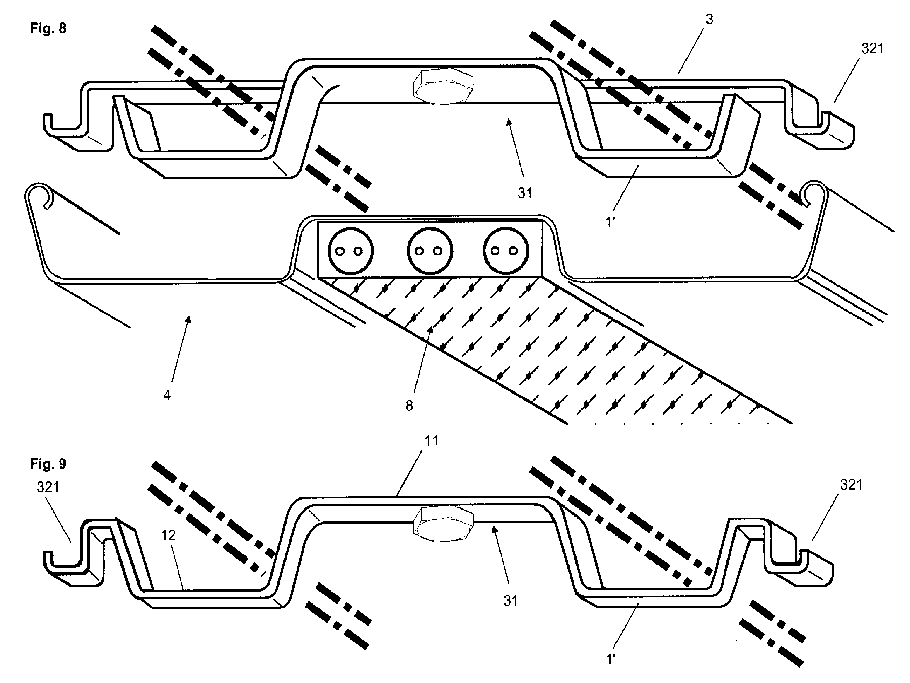

Der Profilverlauf der Abdeckung 4 ist dem Profilverlauf des Kabelkanals 1 angepasst. Die Abdeckung 4 weist daher zwei U-Profil-förmige Seitenelemente 42 auf, die durch ein Abdeckungsmittelteil 41 miteinander verbunden sind. In der Mitte weist die Abdeckung 4 daher ein nach unten geöffnetes U-Profil 45 auf, das durch das Abdeckungsmittelteil 41 und die damit verbundenen Wandelemente 421 der Seitenelemente 42 gebildet wird. Dieses nach unten geöffnete U-Profil 45 dient der Aufnahme einer elektrischen Vorrichtung, insbesondere der Aufnahme einer Beleuchtungsvorrichtung 8, wie sie in Figur 8 gezeigt ist. Sofern keine Beleuchtungsvorrichtung 8 vorgesehen ist, können ein schmales Mittelteil 11 und breitere Kanalelemente 12 vorgesehen werden.

Figur 4 zeigt das Halteelement 3, den Kabelkanal 1 und die Abdeckung 4 in Schnittdarstellung von vorn.

Figur 5 zeigt das Halteelement 3, den optional mit Ventilationsöffnungen 122 versehenen Kabelkanal 1 und die optional mit Ventilationsschlitzen 43 versehene Abdeckung 4 in räumlicher Darstellung. Hier gilt es zu beachten, dass das Halteelement 3, welches dem Halten der Abdeckung 4 dient, vorzugsweise nur eine geringe Länge von wenigen Zentimetern aufweist. Der Kabelkanal 1 kann durchgezogen sein, besteht jedoch vorzugsweise aus Kabelkanalsegmenten 1' die ebenfalls nur eine geringe Länge von wenigen Zentimetern aufweisen. Diese Kabelkanalsegmente 1', in die Kabel 9 eingelegt werden, werden in grösseren Abständen von beispielsweise mehreren Metern montiert und bilden dadurch einen mehrteiligen Kabelkanal 1, der von der Abdeckung 4 vollständig abgedeckt wird. Zwischen den Kabelkanalsegmenten 1'liegt das installierte Kabel daher auf der Abdeckung 4 auf.

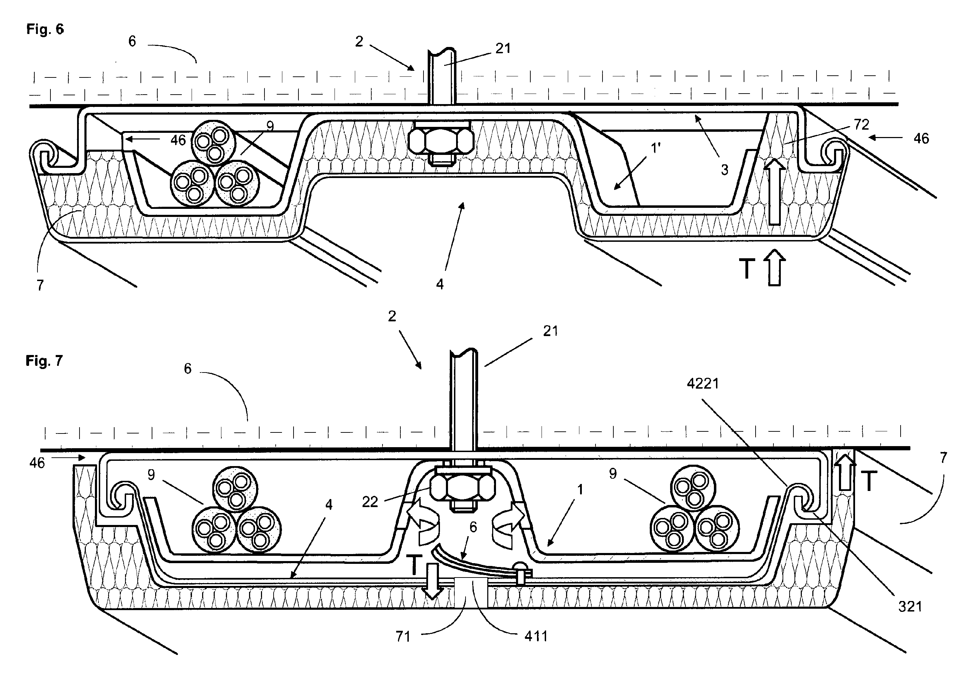

Figur 6 zeigt eine erfindungsgemässe Vorrichtung mit einem zwischen dem Kabelkanal 1 und der Abdeckung 4 vorgesehenen Brandschutzmaterial 7. Ferner ist gezeigt, dass zwischen der Abdeckung 4 und der Decke 6 Belüftungsschlitze 46 vorgesehen sind, durch die Luft direkt in die Kanalelemente 12 eindringen und die eingelegten Kabel 9 belüften kann. Das eingelegte Brandschutzmaterial 7 ist dabei derart dimensioniert, dass die Belüftungsschlitze 46 nicht überdeckt werden. Im Normalbetrieb sind die Kabel 9 daher optimal gekühlt. In Figur 6 ist ferner symbolisch gezeigt, dass auf der rechten Seite der Vorrichtung Wärme T zugeführt wird, weshalb das Brandschutzmaterial 7 über den Belüftungsschlitz 46 hinaus bis gegen die Decke 6 expandiert ist, weshalb dieser Belüftungsschlitz 46 verschlossen wurde. Vorzugsweise wird Brandschutzmaterial 7 gewählt, das im Brandfall derart aufquellen oder expandieren kann, dass die Belüftungsschlitze 46 sowie weitere Ventilationsöffnungen 122, 322, 43 im Kabelkanal 1, im Halteelement 3 und/oder in der Abdeckung 4 dicht abgeschlossen werden.

Die Belüftungsschlitze 46 und die Ventilationsöffnungen 122, 322, 43 im Kabelkanal 1, im Halteelement 3 und/oder in der Abdeckung 4 werden bedarfsweise derart gewählt, dass eine gewünschte Kühlung der eingelegten Kabel 9 erfolgt.

Erfindungsgemäss resultiert daher eine effiziente Umschaltung zwischen zwei Zuständen. Im ersten Zustand erfolgt eine ungehinderte Luftzirkulation. Im zweiten Zustand, bei dem das Brandschutzmaterial 7 expandiert ist, ist die Luftzirkulation vollständig unterbrochen, weshalb eine übermäßige Erwärmung der Kabel 9 verhindert wird.

Figur 7 zeigt eine erfindungsgemässe Vorrichtung mit einem ausserhalb der Abdeckung 4 vorgesehenen Brandschutzmaterial 7. Diese Ausgestaltung ist deshalb besonders vorteilhaft, weil das Brandschutzmaterial 7 nun nicht nur die Kabel 9, sondern die gesamte Vorrichtung schützt. Gezeigt ist ferner, dass die ersten und zweiten Kopplungselemente 321, 4221 in dieser Ausgestaltung je in die entgegen gesetzte Richtung gewandt sind. Das Brandschutzmaterial 7 ist beidseitig fast bis zur Decke 6 hochgezogen, so dass nur Belüftungsschlitze 46 verbleiben. Im Mittelteil der Abdeckung 4 und dem damit verbundenen Brandschutzmaterial 7 sind Öffnungen 411,71 vorgesehen, durch die Luft in die Vorrichtung eindringen und durch die Belüftungsschlitze 46 entweichen kann. Es ist gezeigt, dass der Belüftungsschlitz 46 auf der rechten Seite der Vorrichtung durch Brandschutzmaterial 7 verschlossen wurde, dass unter thermischer Einwirkung expandiert ist.

Ferner ist in Figur 7 gezeigt, dass die Abdeckung 4 mit einem Bimetall 6 versehen ist, welches die Ventilationsöffnung 41 verschliesst, sobald es höheren Temperaturen ausgesetzt wird. Ventilationsöffnungen und entsprechende Verschlussvorrichtungen, können natürlich auch in anderen Formen und Ausgestaltungen vorgesehen werden.

Alternativ kann auch konvertierbares Brandschutzmaterial 7 verwendet werden, das im Ursprungszustand gut luftdurchlässige Poren aufweist, die im Brandfall jedoch verschlossen bzw. verschweisst werden. In einer weiteren Ausgestaltung werden mindestens zwei unterschiedliche Materialien verwendet. Beispielsweise wird über einer ersten Materialschicht, die im Brandfall expandieren kann, eine feuerfeste, starre zweite Materialschicht vorgesehen, die von der ersten, im Brandfall expandierenden Materialschicht angehoben, und vor die Ventilationsöffnungen 122, 322, 43, 46 geschoben wird. Auf diese Weise können Materialien mit optimalen Eigenschaften gewählt werden. Die erste Materialschicht kann hinsichtlich der Expansionseigenschaften optimiert werden. Die zweite Materialschicht, welche die Ventilationsöffnungen im Brandfall verschliesst, wird hinsichtlich des Brandschutzes optimiert.

Figur 8 zeigt ein Kabelkanalsegment 1' und ein Halteelement 3, die kostengünstig aus einem einzigen Blechstück 31 gefertigt sind. Ferner ist die Abdeckung 4 von Figur 6 gezeigt, die mit einer Leuchteinheit 8 mit Leuchtstoffröhren versehen ist. Die der Stromversorgung der Leuchtstoffröhren dienenden Leitungen können dabei ebenfalls innerhalb des Kabelkanals 1 geführt werden.

Figur 9 zeigt ein weiteres, mit minimalem Materialaufwand gefertigtes Kabelkanalsegment 1', das mit ersten Kopplungselementen 321 versehen ist. Die Kopplungselemente 321 können auf der Höhe des Mittelteils 11 des Kabelkanalsegments 1' und somit praktisch an der Decke 6 anliegen, da die Kanalelemente 12 etwas nach unten gezogen werden können, um die Kabel 9 einzulegen.

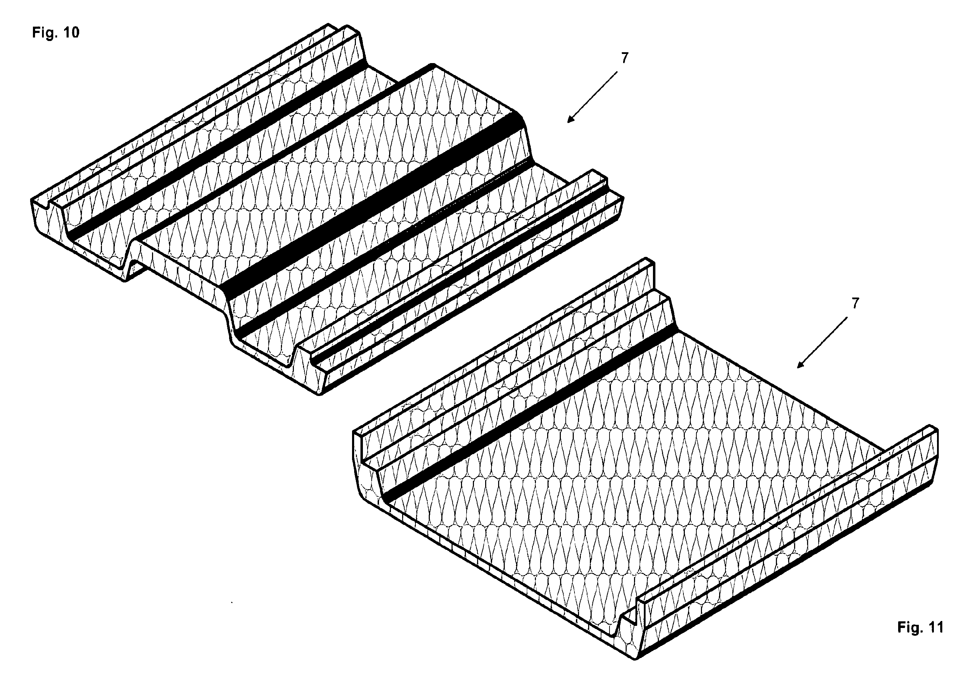

Fig. 10 und 11 zeigen dreidimensional die Brandschutzmaterialien 7 der Vorrichtungen von Figur 6 und 7 in für die Verbindung mit der Abdeckung 4 geeigneten Formen. Feuerhemmende Materialien bzw. Brandschutzmaterial 7 werden daher entsprechend geformt und verfestigt und anschliessend mit der Abdeckung mechanisch und/oder mittels eines Klebers verbunden.

## Patentansprüche

1. Vorrichtung mit einem Kabelkanal (1), der mehrere dem Halten von Kabel (9) dienende Kabelkanalsegmente (1') umfasst, die voneinander beabstandet mittels Montageelementen (2; 21, 22) an einer Decke (6) montiert sind, wobei die Kabelkanalsegmente (1') je ein mittels der Montageelemente (2; 21, 22) mit der Decke (6) verbundenes Kanalmittelteil (11) aufweisen, welches auf jeder Seiten mit einem dem Halten der Kabel (9) dienenden Kanalelement (12) versehen ist, und mit einer den Kabelkanal (1) von unten bis zur Decke (6) zumindest teilweise umfassenden Abdeckung (4), die ein Mittelteil (41) und beidseits davon vorgesehene Seitenteile (422) aufweist, an denen erste Kopplungselemente (4221) vorgesehen sind, **dadurch gekennzeichnet, dass** ein Halteelement (3) vorgesehen ist, welches ein gegen die Abdeckung (4) geöffnetes und die Kabelkanalsegmente (1') beidseitig überragendes U-Profil bildet und Seitenwände (32) aufweist, an denen hakenförmige zweite Kopplungselemente (321) vorgesehen sind, die formschlüssig mit den ersten Kopplungselementen (4221) der Abdeckung (4) verbunden oder verbindbar sind, wobei zwischen der Unterseite der Kabelkanalsegmente (1') und der Oberseite der Abdeckung (4) ein Abstand mit einem Raum verbleibt, der ganz oder teilweise mit einem Brandschutzmaterial (7) gefüllt ist.

2. Vorrichtung nach Anspruch 1, **dadurch gekennzeichnet, dass** die Kanalelemente (12) erste und zweite Kanalseiten (121, 122) aufweisen, wobei die oberen Enden der einander zugewandten ersten Kanalseiten (121) durch das Kanalmittelteil (11) miteinander verbunden und die nach aussen gewandten zweiten Kanalseiten (122) gegenüber den ersten Kanalseiten (121) vorzugsweise verkürzt sind, so dass die Kabel (9) über diese zweiten Kanalseiten (122) angehoben und in das entsprechende Kanalelement (12) eingelegt werden können.

3. Vorrichtung nach Anspruch 1 oder 2, **dadurch gekennzeichnet, dass** die Abdeckung (4) einen Profilquerschnitt aufweist, der zumindest annähernd dem Profilquerschnitt der Kabelkanalsegmente (1') entspricht und/oder dass die Abdeckung (4) zwei dem Umfassen der Kanalelemente (12) dienende Seitenelemente (42) aufweist die durch ein Abdeckungsmittelteil (11) miteinander verbunden sind.

4. Vorrichtung nach einem der Ansprüche 1-3, **dadurch gekennzeichnet, dass** in einer Einformung der Abdeckung (4) eine elektrische Vorrichtung, beispielsweise eine elektrische Leuchte (8) vorgesehen ist.

5. Vorrichtung nach einem der Ansprüche 1-4, **dadurch gekennzeichnet, dass** die Abdeckung (4) mit Ventilationsöffnungen (122, 43) versehen ist, die der Lüftung der installierten Kabel (9) dienen.

6. Vorrichtung nach einem der Ansprüche 1-5, **dadurch gekennzeichnet, dass** der Abstand zwischen der Unterseite des Kabelkanals (1) und der Oberseite der Abdeckung (4) 0,5 cm bis 2,5 cm beträgt.

7. Vorrichtung nach einem der Ansprüche 1-6, **dadurch gekennzeichnet, dass** das Brandschutzmaterial (7) derart beschaffen ist, das es bei höheren Temperaturen expandiert oder dessen Poren verschliesst und den Raum zwischen der Unterseite des Kabelkanals (1) und der Oberseite der Abdeckung (4) vollständig ausfüllt und/oder die Ventilationsöffnungen (122, 43, 411) dicht abschliesst.

8. Vorrichtung nach einem der Ansprüche 1-7, **dadurch gekennzeichnet, dass** wenigstens eine der Ventilationsöffnungen (122, 41, 411) mittels eines thermisch reaktiven Elements (6), gegebenenfalls mit einem mit der Abdeckung (4) verbundenen Bimetall abschliessbar ist.

9. Vorrichtung nach einem der Ansprüche 1-8, **dadurch gekennzeichnet, dass** jedes Kabelkanalsegment (1') und das zugehörige Halteelement (3) voneinander getrennt sind.

10. Vorrichtung nach einem der Ansprüche 1-8, **dadurch gekennzeichnet, dass** jedes Kabelkanalsegment (1') und das zugehörige Halteelement (3) einstückig miteinander verbunden und aus einem Element, vorzugsweise einem Blech gefertigt sind.

11. Vorrichtung nach einem der Ansprüche 1-10, **dadurch gekennzeichnet, dass** die ersten und zweiten Kopplungselemente (321, 4221) formschlüssig miteinander verbindbar und manuell wieder lösbar sind.

12. Vorrichtung nach einem der Ansprüche 1-11, **dadurch gekennzeichnet, dass** die ersten und zweiten Kopplungselemente (321, 4221) mittels eines Sicherungselements (5) verbunden sind.

13. Vorrichtung nach einem der Ansprüche 1-12, **dadurch gekennzeichnet, dass** die Abdeckung ein gegen die Decke geöffnetes U-Profil aufweist.

## Claims

1. Device with a cable duct (1) comprising a plurality of cable duct segments (1') serving for supporting cables (9), which cable duct segments (1') are mounted spaced from one another on a ceiling (6) by means of mounting elements (2; 21, 22), wherein the cable duct segments (1') each comprise a channel middle part (11) that is connected to the ceiling (6) by means of the mounting elements (2; 21, 22) and that comprises on each side a channel element (12) serving supporting the cables (9), and with a cover (4) that is at least partially encompassing the cable duct (1) from below up to the ceiling (6), which cover (4) comprises a centre part (41) and on both sides thereof lateral parts (422), on which first coupling elements (4221) are provided, **characterised in that** a retaining element (3) is provided, which forms a U-profile that is opened towards the cover (4) and extends the cable duct segments (1') on both sides and that comprises sidewalls (32), on which hook shaped second coupling elements (321) are provided, which in a form locking manner are connected or can be connected with the first coupling elements (4221) of the cover (4), wherein between the lower side of the cable duct segments (1') and the upper side of the cover (4) a distance with a room remains, which is fully or partially filled with a fire protection material.

2. Device according to claim 1, **characterised in that** the channel elements (12) comprises first and second channel sides (121, 122), wherein the upper ends of the first channel sides (121) facing one another are connected with one another by means of the channel middle part (11) and that the second channel sides (122) that are facing outwards are preferably shortened compared to the first channel sides (121), so that the cables (9) can be lifted over these second channel sides (122) and can be laid into the corresponding channel element (12).

3. Device according to claim 1 or 2, **characterised in that** the cover (4) comprises a profile cross-section, which at least approximately corresponds to the profile cross-section of the cable duct segments (1') and/or that the cover (4) comprises two lateral elements (42) serving for embracing the channel elements (12), which are connected to one another by a cover middle part (11).

4. Device according to one of the claims 1-3, **characterised in that** in a cavity of the cover (4) an electrical device, such as an electrical lamp (8) is provided.

5. Device according to one of the claims 1-4, **characterised in that** the cover (4) is provided with ventilation openings (122, 43), which serve for ventilating the installed cables (9).

6. Device according to one of the claims 1-5, **characterised in that** the distance between the lower side of the cable duct (1) and the upper side of the cover (4) is 0,5 cm up to 2,5 cm.

7. Device according to one of the claims 1-6, **characterised in that** the fire protection material (7) is composed in such a way, that it expands with higher temperature or closes its porosities and completely fills the space between the lower side of the cable duct (1) and the upper side of the cover (4) and/or tightly closes the ventilation openings (122, 43, 411).

8. Device according to one of the claims 1-7, **characterised in that** at least one of the ventilation openings (122, 41, 411) can be closed by means of a thermally reactive element (6), if appropriate, by means of a bi-metal that is connected to the cover (4).

9. Device according to one of the claims 1-8, **characterised in that** each cable duct segment (1') and the related retaining element (3) are separated from one another.

10. Device according to one of the claims 1-8, **characterised in that** each cable duct segment (1') and the related retaining element (3) are connected in one part with one another and are made from a single element, preferably a metal sheet.

11. Device according to one of the claims 1-10, **characterised in that** the first and the second coupling elements (321, 4221) can be connected with one another in a form locking manner and can manually be released again.

12. Device according to one of the claims 1-11, **characterised in that** the first and a second coupling elements (321, 4221) are connected by means of a locking element (5).

13. Device according to one of the claims 1-12, **characterised in that** the cover comprises a U-profile that is opened towards the ceiling.

## Revendications

1. Dispositif avec un canal de câble (1), qui comprend plusieurs segments de canal de câble (1') servant au maintien de câbles (9), segments qui sont montés à distance les uns des autres au moyen d'éléments de montage (2; 21, 22) à un plafond (6), les segments de canal de câble (1') présentant une partie médiane de canal (11) reliée au moyen des éléments de montage (2; 21, 22) au plafond (6), partie qui est munie de part et d'autre d'un élément de canal (12) servant au maintien des câbles (9), et avec un couverture (4) entourant au moins partiellement le canal de câble (1) d'en bas jusqu'au plafond (6), couverture qui présente une partie médiane (41) et des parties latérales (422) prévues de part et d'autre de ce dernier, sur lesquelles sont prévus des premiers éléments d'accouplement (4221), **caractérisé en ce qu'**un élément de retenue (3) est prévu qui forme un profilé en U ouvert en direction de la couverture (4) et chevauchant les segments de canal de câble (1') de part et d'autre, et présente des parois latérales (32) contre lesquelles sont prévus des seconds éléments d'accouplement (321) en forme de crochet qui sont reliés ou reliables par concordance de formes aux premiers éléments d'accouplement (4221) du couverture (4), entre la face inférieure des segments de canal de câble (1') et la face supérieure du couverture (4), il reste une distance avec un espace qui est rempli en tout ou partie d'un matériau ignifuge (7) de protection contre l'incendie.

2. Dispositif selon la revendication 1, **caractérisé en ce que** les éléments de canal (12) présentent des premiers et secondes faces de canal (121, 122), les extrémités supérieures des premières faces de canal (121) tournées l'une vers l'autre étant reliées entre elles par la partie médiane de canal (11) et les secondes faces de canal (122) tournées vers l'extérieur (122) étant de préférence raccourcies par rapport aux premières faces de canal (121), de sorte que les câbles (9) peuvent soulevés au-dessus de ces secondes faces de canal (122) et peuvent être déposés dans l'élément de canal (12) correspondant.

3. Dispositif selon la revendication 1 ou 2, **caractérisé en ce que** la couverture (4) présente une section transversale de profilé qui correspond au moins approximativement à la section transversale de profilé des segments de canal de câble (1') et/ou **en ce que** la couverture (4) présente deux éléments latéraux (42) servant à encercler les éléments de canal (12), éléments qui sont reliés entre eux par une partie médiane de couverture (11)

4. Dispositif selon l'une des revendications 1 à 3 **caractérisé que** dans une cavité de la couverture (4), il est prévu un dispositif électrique par exemple une lampe électrique (8).

5. Dispositif selon l'une des revendications 1 à 3, **caractérisé en ce que** la couverture (4) est munie d'ouvertures de ventilation (122, 43) qui servent à la l'aération des câbles installés (9).

6. Dispositif selon l'une des revendications 1 à 5, **caractérisée en ce que** la distance entre la face inférieure du canal de câble (1) et la face supérieure de la couverture (4) est comprise entre 0,5 cm et 2,5 cm

7. Dispositif selon l'une des revendications 1 à 6, **caractérisé en ce que** le matériau ignifugé (7) est prévu de sorte qu'il se dilate à des températures élevées ou referme ces pores et remplit complètement l'espace entre la face inférieure du canal de câble (1) et la face supérieure de la couverture (4) et/ou ferme les ouvertures de ventilation (122, 43, 411) de manière étanche.

8. Dispositif selon l'une des revendications 1 à 7, **caractérisé en ce qu'**au moins une des ouvertures de ventilation (122, 41, 411) peut être fermée au moyen d'un élément réactif thermique (6), éventuellement par un bimétal relié à la couverture (4).

9. Dispositif selon l'une des revendications 1 à 8, **caractérisé en ce que** chaque segment de canal de câble (1') et l'élément de retenue respectif (3) sont séparés l'un de l'autre.

10. Dispositif selon l'une des revendications 1 à 8, **caractérisé en ce que** chaque segment de canal de câble (1') et l'élément de retenue respectif (3) sont reliés entre eux d'un seul tenant et sont fabriqués à partir d'un élément de préférence une tôle.

11. Dispositif selon l'une des revendications 1 à 10, **caractérisé en ce que** les premiers et seconds éléments d'accouplement (321, 4221) sont reliables entre eux par concordance de forme et sont détachables manuellement.

12. Dispositif selon l'une des revendications 1 à 11, **caractérisé en ce que** les premiers éléments et seconds éléments d'accouplement (321, 4221) sont reliés au moyen d'un élément de blocage (5).

13. Dispositif selon l'une des revendications 1 à 12, **caractérisé en ce que** la couverture présente un profilé en U ouvert en direction du plafond.
